# FASCICULE DE BREVET EUROPEEN

(11) **EP 3 555 384 B1**
(45) Date de publication et mention de la délivrance du brevet: **20.04.2022**
(21) Numéro de dépôt: 17822001.8
(22) Date de dépôt: 14.12.2017
(51) Int. Cl.: E04B 1/76, F16B 5/06

(54) **EQUERRE DE FIXATION D'UN PANNEAU ISOLANT**
BEFESTIGUNGSKLAMMER FÜR EINE DÄMMPLATTE
ATTACHMENT BRACKET FOR AN INSULATING PANEL

(30) Priorité: 15.12.2016 FR 1662548
(43) Date de publication de la demande: 23.10.2019
(73) Titulaire: SAINT-GOBAIN ISOVER, 92400 Courbevoie (FR)
(72) Inventeur: BEN SAAD, Manel, 92250 La Garenne Colombes (FR); HISS, Marc, 67440 Dimbsthal (FR); MAGAT, Germain, 93500 Pantin (FR)
(74) Mandataire: Saint-Gobain Recherche
(86) Numéro de dépôt international: PCT/FR2017/053570
(87) Numéro de publication internationale: WO 2018/109399

(56) Documents cités:
- EP-A1- 2 634 324
- WO-A1-2016/094955
- DE-A1- 3 335 702
- DE-U1- 9 010 503
- FR-A1- 2 268 971

## Description

La présente invention est relative au domaine des équerres utilisées dans l'isolation. Ces équerres sont utilisées afin de maintenir une isolation sur un mur.

### ART ANTÉRIEUR

Les documents DE9010503U et WO2016094955 divulguent un procédé de pose des panneaux isolants sur la paroi d'un mur utilisant une équerre comprenant une plaque de fixation et une plaque de maintien avec des dents pour empêcher le panneau isolant de basculer sur lui-même.

Actuellement, il existe plusieurs techniques pour poser une isolation sur une paroi d'un mur. Cette isolation se présente sous la forme de panneaux isolants (roulé ou non). Par exemple, il est possible de fixer ces panneaux isolants en les agrafant ou en les collant.

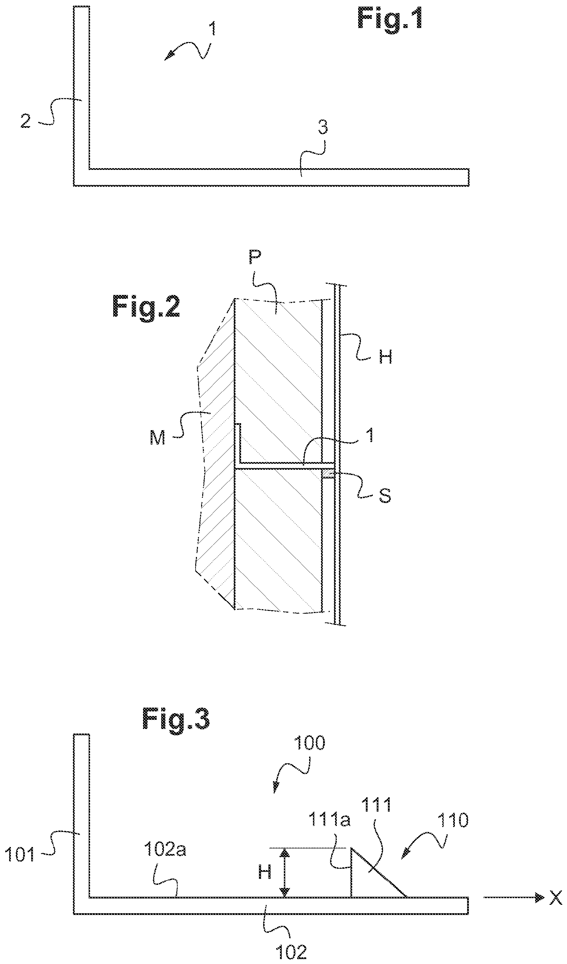

Il existe aussi une possibilité de fixer mécaniquement un panneau isolant P sur un mur M afin, par exemple, de permettre la réalisation d'autres opérations de pose. Cette possibilité est l'utilisation d'équerre 1 comme visible aux figures 1 et 2. Une telle équerre 1 consiste en une plaque de fixation 2 conçue pour être fixée au mur et une plaque d'embrochage 3 monobloc avec ladite plaque de fixation. Cette plaque d'embrochage 3 s'étend perpendiculairement depuis la plaque de fixation 2 pour donner au tout une forme de L.

Le panneau isolant P est alors embroché ou calé sur le bord de la plaque d'embrochage 3 sur ladite équerre 1 puis plaqué sur le mur M comme visible sur la figure 2 représentant une vue de dessus. L'équerre est ensuite utilisée pour supporter une structure métallique ou en bois S permettant le montage d'éléments additionnels comme un deuxième jeu d'ossature secondaire H ou directement des éléments d'habillage du type (parements de façade de toute nature, cassettes, clins, bardage, plaques de plâtre...)

Toutefois, ces équerres ont l'inconvénient de ne pas permettre un maintien du panneau isolant contre le basculement. De ce fait, le panneau isolant est susceptible, sous l'effet de son propre poids, de basculer créant ainsi un espace d'air entre le panneau isolant et le mur.

Ce basculement entraîne, premièrement, une variation des performances de l'isolation du système final du fait de la lame d'air créée entre le mur M et le panneau isolant P puisque la surface de contact de celui-ci avec la paroi diminue et n'est plus continue

Deuxièmement, ce basculement peut entraîner des dommages plus importants comme, par exemple, une déchirure d'un éventuel film pare-vapeur ou d'un éventuel film pare-pluie associés audit panneau isolant ou une déformation de ladite équerre suite à une mauvaise répartition de la contrainte exercée par ledit panneau isolant.

Troisièmement, le basculement du panneau isolant entraîne une perte de temps et d'efficacité lors du montage de l'isolation. En effet, l'équerre de fixation participe au maintien temporaire ou définitif de l'isolation avant qu'une membrane soit installée. Par conséquent, si le ou les panneaux isolants basculent, la pose de la membrane est plus difficile.

### RÉSUMÉ DE L'INVENTION

La présente invention se propose donc de résoudre ces inconvénients en fournissant une équerre pour le montage de panneaux isolants permettant un meilleur maintien contre le basculement et un contact plus fiable du panneau isolant contre le mur.

A cet effet, l'invention concerne un procédé selon la revendication 1, un ensemble selon la revendication 5, et une équerre selon la revendication 6, ladite équerre pour la pose d'un panneau isolant sur une paroi d'un mur comprenant , entre autres, une plaque de fixation destinée à être fixée à ladite paroi et une plaque de maintien, ladite plaque de maintien s'étendant sensiblement perpendiculairement à ladite plaque de fixation afin de maintenir ledit panneau isolant, adite équerre comprenant en outre des moyens de maintien anti-basculement agencés pour empêcher le panneau isolant de basculer sur lui-même.

Cette invention permet avantageusement de fournir une équerre munie de moyens permettant de retenir le panneau lorsque celui-ci tend à basculer sous son propre poids ou à cause d'effort dus au vent ou à sa manipulation sur chantier. En effet, les moyens de maintien anti-basculement tendent à exercer une résistance et/ou contrainte empêchant un tel basculement.

Selon l'invention, lesdits moyens de maintien anti-basculement comprennent au moins une dent s'étendant saillante sur une face de ladite plaque d'embrochage, notamment perpendiculairement depuis ladite plaque de maintien ou formant un angle aigu avec la plaque de maintien en direction de la plaque de fixation.

Selon un exemple, lesdits moyens de maintien anti-basculement comprennent au moins deux dents agencées à des distances différentes de la plaque de fixation.

Selon un exemple, lesdits moyens de maintien anti-basculement comprennent au moins deux dents agencées parallèlement l'une par rapport à l'autre.

Selon un exemple, chaque dent se présente sous la forme d'une lame.

Selon la revendication 6, la dent se présente sous la forme d'un profilé s'étendant sur au moins une partie de la largeur de la plaque de maintien.

Selon un exemple, chaque dent présente un profil de triangle rectangle ayant l'un de ses cathètes en regard de la plaque de fixation.

Selon un exemple, lesdits moyens de maintien anti-basculement comprennent au moins un volet agencé dans un logement, traversant ou non, réalisé dans l'épaisseur de la plaque de maintien.

Selon un exemple, lesdits moyens de maintien anti-basculement comprennent au moins deux volets, chacun desdits volets étant agencé à une distance particulière de ladite plaque de fixation.

Selon un exemple, lesdits moyens de maintien anti-basculement comprennent au moins deux volets agencés côte à côte à la même distance de ladite plaque de fixation.

Selon un exemple, les moyens de maintien anti-basculement sont monoblocs avec la plaque de maintien.

Selon un exemple, lesdits moyens de maintien anti-basculement sont rapportés sur ladite plaque de maintien.

Selon un exemple, ladite plaque de maintien est munie d'une ouverture dans laquelle un support est rapporté, lesdits moyens de maintien anti-basculement étant agencés sur ledit support.

Selon un exemple, l'équerre comprend en outre des moyens de maintien anti-affaissement comprenant au moins une surface anti-affaissement générée par une lame s'étendant depuis la plaque de maintien de façon sensiblement perpendiculaire et horizontale par rapport à la paroi du mur sur laquelle l'équerre est fixée.

Selon un exemple, le panneau isolant est embroché sur l'équerre.

Selon l'invention l'équerre traverse toute l'épaisseur du panneau isolant.

Selon un exemple, les moyens anti- basculement se trouvent, au moins en partie, à l'extérieur du panneau isolant et coopèrent avec une face du panneau isolant (sa face opposée à la paroi) pour maintenir le panneau et empêcher son basculement.

La présente invention concerne donc selon la revendication 1 un procédé de pose d'au moins une épaisseur de panneau isolant sur la paroi d'un mur, ledit procédé comprenant entre autres, les étapes suivantes :
- Se munir d'au moins une équerre selon l'invention et la fixer sur une paroi dudit mur ;
- Se munir d'un panneau isolant;
- Plaquer ledit panneau isolant sur la paroi en exerçant une contrainte de poussée de sorte que le panneau isolant soit au contact, sur son épaisseur, avec la plaque de maintien de ladite équerre;
- Relâcher la contrainte pour permettre audit panneau isolant de reprendre son volume initial et pour permettre à la dent de ladite équerre de maintenir le panneau isolant ;
et si on veut poser au moins une seconde épaisseur de panneau isolant :
- Se munir d'un autre panneau isolant;
- Plaquer ledit panneau isolant sur la paroi en exerçant une contrainte de poussée de sorte que le panneau isolant soit au contact, sur son épaisseur, avec la plaque de maintien de ladite équerre;
- Relâcher la contrainte pour permettre audit panneau isolant (P) de reprendre son volume initial et pour permettre à la dent de ladite équerre de maintenir le panneau isolant.

La présente demande concerne en outre un procédé non-revendiqué de pose d'au moins une épaisseur de panneau isolant sur la paroi d'un mur, caractérisé en ce qu'il comprend les étapes suivantes :
- Se munir d'au moins une équerre selon l'invention et la fixer sur une paroi dudit mur ;
- Se munir d'un panneau isolant;
- Plaquer ledit panneau isolant sur la paroi en exerçant une contrainte de poussée de sorte que le panneau isolant soit au contact, sur son épaisseur, avec la plaque de maintien de ladite équerre;
- Agir sur au moins un volet pour le faire pivoter et le placer dans une position sensiblement perpendiculaire par rapport à la plaque de maintien;
- Relâcher la contrainte pour permettre audit panneau isolant (P) de reprendre son volume initial et permettre audit volet de maintenir ledit panneau isolant;

et si on veut poser au moins une seconde épaisseur de panneau isolant :
- Se munir d'un autre panneau isolant;
- Plaquer ledit panneau isolant sur la paroi en exerçant une contrainte de poussée de sorte que le panneau isolant soit au contact, sur son épaisseur, avec la plaque de maintien de ladite équerre;
- Agir sur au moins un volet pour le faire pivoter dans une position sensiblement perpendiculaire par rapport à la plaque de maintien;
- Relâcher la contrainte pour permettre audit panneau isolant de reprendre son volume initial et permettre audit volet de maintenir ledit panneau isolant.

Selon un exemple, ledit au moins un panneau isolant est embroché sur ladite équerre.

Selon un exemple, ladite équerre comprend au moins deux volets agencés côte à côte à la même distance de ladite plaque de fixation, ladite équerre étant agencée pour être au contact de deux panneaux isolants, les volets étant pivotés pour que chaque volet maintienne un panneau isolant.

Selon un exemple dans lequel chaque panneau isolant est maintenu par deux équerres, pour deux panneaux isolants placés côte à côte, les équerres sont fixées au mur pour être agencées en quinconce, certaines équerres embrochant un panneau isolant alors que d'autres équerres sont agencées entre deux panneaux isolants.

La demande concerne enfin un procédé non-revendiqué de doublage de mur, comportant la pose d'au moins une épaisseur de panneau isolant et comprenant le montage d'une ossature de doublage par fixation de supports sur les plaques de maintien des équerres, et la fixation de panneaux de doublage sur lesdits supports.

### DESCRIPTION DES FIGURES

D'autres particularités et avantages ressortiront clairement de la description qui en est faite ci-après, à titre indicatif et nullement limitatif, en référence aux dessins annexés, dans lesquels:
- les fig. 1 et 2 sont des représentations schématiques d'une vue d'une équerre seule et d'une vue de dessus de l'équerre montée sur un mur selon l'art antérieur;
- la fig. 3 est une représentation schématique d'une équerre selon un premier mode de réalisation de l'invention;
- les fig. 4 à 6 sont des représentations schématiques de différents modes d'exécution du premier mode de réalisation de l'invention;
- les fig. 7 à 9 sont des vues de dessus des étapes de pose de l'équerre selon le premier mode de réalisation de l'invention;
- les fig. 10 et 11 sont des représentations schématiques d'une variante du premier mode de réalisation de l'invention.
- la fig. 12 est une représentation schématique d'une équerre selon un second mode de réalisation non-revendiqué;
- les fig. 13a à 13d sont des représentations schématiques de différents modes d'exécution du second mode de réalisation ;
- les fig. 14 à 17 sont des vues de dessus des étapes de pose de l'équerre selon le premier mode de réalisation de l'invention;
- les fig. 18, 19, 20a et 20b sont des représentations schématiques de variantes du second mode de réalisation .
- les fig. 21a et 21b sont des représentations schématiques d'une variante commune aux différents modes de réalisation non-revendiqués.
- les fig. 22a et 22b sont des représentations schématiques d'un montage alternatif .

### DESCRIPTION DETAILLÉE DE L'INVENTION

L'invention procède de l'idée générale inventive de fournir une équerre de fixation de structure secondaire sur un mur permettant de faciliter la pose d'un isolant ou panneau isolant et d'empêcher le basculement inopiné de l'isolant

A la figure 3 est représentée une équerre 100 selon la présente invention. Cette équerre 100 comprend une plaque de fixation 101 prévue pour être fixée sur un mur M et une plaque de maintien 102. Cette plaque de maintien 102 s'étend sensiblement perpendiculairement depuis la plaque de fixation 101, dans une direction X dite longitudinale de l'équerre. L'équerre 100 peut alors avoir une forme en L ou une forme en T. La plaque de fixation 101 et la plaque de maintien 102 pourront être monoblocs ou non.

Pour la suite et en référence aux figures, on définit une direction latérale Y de l'équerre comme une direction orthogonale à la direction longitudinale X et parallèle à la plaque de maintien 102.

Un plan transversal de l'équerre est un plan orthogonal à la direction longitudinale X.

Cette équerre 100 ou les différentes plaques 101, 102 pourront être réalisées dans un matériau de type plastique, un matériau composite, un métal ou un de ses alliages, ou en bois.

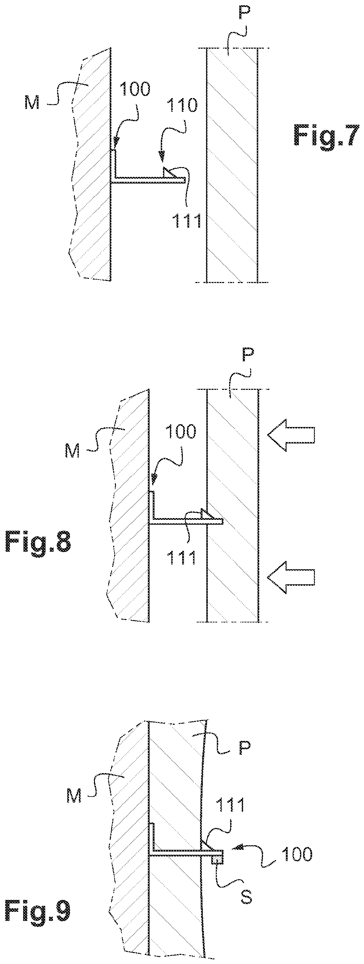

Cette équerre 100 est utilisée pour la fixation à une paroi d'un mur M d'au moins un panneau isolant P type laine de verre ou laine de roche c'est-à-dire en matériaux fibreux. Le panneau isolant P peut se présenter sous la forme d'une plaque ou sous la forme d'un rouleau. L'équerre 100 peut être fixée au mur M de sorte que la plaque de maintien 102 s'étende sensiblement ou totalement dans un plan horizontal ou, préférentiellement, sensiblement ou totalement dans un plan vertical. L'équerre 100 peut également être agencée pour le montage d'une ossature de doublage (non représentée) par fixation de supports S (visible à la figure 9) sur les plaques de maintien 102 des équerres 100.

Selon l'invention, cette équerre 100 est munie de moyens de maintien anti-basculement 110. Ces moyens de maintien anti-basculement 110 sont agencés pour empêcher le panneau isolant P de basculer sur lui-même et de perturber la fonction isolante dudit panneau isolant P une fois celui-ci embroché.Selon un premier mode de réalisation visible à la figure 3, les moyens de maintien anti-basculement 110 comprennent au moins une dent 111. Cette dent 111 est agencée sur la plaque de maintien 102 et, plus particulièrement, sur l'une de ses faces 102a. Cette dent 111 s'étend saillante sur une face 102a de ladite plaque de maintien 102, notamment perpendiculairement depuis ladite plaque de maintien 102 ou forme un angle aigu avec la plaque de maintien en direction de la plaque de fixation. Cette dent 111 présente un profil tel qu'elle offre une résistance au déplacement dudit panneau isolant P. Un profil correspondant à cette problématique est, par exemple et de façon non limitative, un profil triangulaire ayant une forme de triangle rectangle. Cette dent 111 en forme de triangle rectangle est alors agencée pour avoir l'un de ses cathètes 111a en regard de la plaque de fixation 101. Ainsi, lorsque le panneau isolant P est embroché sur l'équerre 100, la dent 111 pénètre ledit panneau isolant P via son hypoténuse offrant un minimum de résistance à l'embrochage. Par contre, une fois le panneau isolant P embroché, le maintien est assuré par ledit cathète 111a en regard de la plaque de fixation 101. En effet, ce cathète 111a, qui s'étend perpendiculairement à la plaque de maintien 102, offre une surface générant une résistance empêchant le panneau isolant P de basculer. Cette dent 111 pourra être monobloc avec la plaque de maintien 102 ou rapportée sur celle-ci. Dans ce cas, elle pourra être réalisée dans un matériau différent.

Bien entendu, dans le cas d'une équerre en forme de T, il pourra être prévu d'avoir une ou plusieurs dents 111 agencées sur l'une et ou l'autre des faces 102a de la plaque de maintien 102.

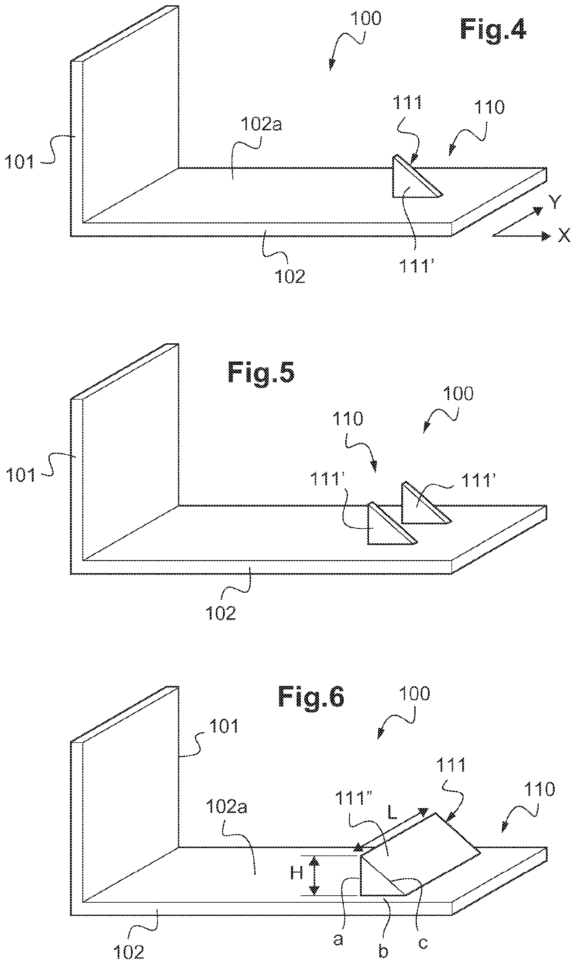

Selon un premier mode d'exécution visible à la figure 4, la dent 111' se présente sous la forme d'une lame s'étendant perpendiculairement à l'une des faces 102a de la plaque de maintien 102. Cette configuration en lame permet avantageusement d'offrir une résistance suffisamment faible pour ne pas gêner l'embrochage du panneau isolant P tout en offrant une résistance suffisante empêchant ledit panneau isolant P de basculer.

Dans une variante de ce mode d'exécution visible à la figure 5, l'équerre 100 comprend au moins deux dents 111' parallèles. Cette variante permet avantageusement d'augmenter la résistance au basculement sans pour autant rendre l'embrochage plus difficile.

Selon l'invention, en particulier la revendication 6, et comme visible à la figure 6, la dent se présente sous la forme d'un profilé 111" de section triangulaire s'étendant sur tout ou partie de la largeur de ladite plaque de maintien 102. Le profilé 111" est de section constante dans sa direction principale, qui correspond en l'espèce à la direction latérale Y de l'équerre.

La dimension du profilé dans cette direction principale est typiquement supérieure aux dimensions de sa section. En référence à la figure 6 par exemple, la longueur L du profilé est supérieure aux dimensions des côtés a, b, c de sa section.

Ce second mode d'exécution a l'avantage de présenter une plus grande surface en regard du panneau isolant P une fois celui-ci embroché et donc d'offrir une meilleure résistance au basculement.

Pour limiter la résistance lors de l'embrochage, ce profilé 111" est conçu pour avoir une hauteur plus faible que la ou les dents 111' du premier mode d'exécution. Cette hauteur plus faible permet d'obtenir une plus faible surface frontale lors de l'embrochage tout en gardant une surface de résistance au basculement importante. Dans une variante d'exécution, l'équerre peut comprendre non pas un profilé mais une succession d'au moins deux profilés alignés l'un avec l'autre dans la direction latérale de l'équerre.

Ce premier mode de réalisation utilisant des dents 111 fonctionne de la façon suivante visible aux figures 7 à 9. L'opérateur fixe, dans un premier temps, l'équerre 100 au mur M. Puis, il se munit du panneau isolant P et l'embroche sur ladite équerre 100. Le panneau isolant P pourra être préalablement et localement incisé pour faciliter l'embrochage. Il embroche le panneau isolant P en exerçant une pression sur celui-ci jusqu'à ce que la dent 111 passe au travers dudit panneau isolant P et soit visible. Dès lors, il peut relâcher la pression qu'il exerce sur ledit panneau isolant P, celui-ci tendant à reprendre son volume initial. Le panneau isolant P vient alors en contact avec la dent 111. Celle-ci, du fait de sa conception et de sa configuration, offre, par l'intermédiaire de son cathète 111a en regard de la plaque de fixation 101, une résistance au panneau isolant P l'empêchant de reprendre de son volume initial. Idéalement, la dent 111 est agencée à une distance de la plaque de fixation 101 lui permettant d'empêcher la totalité du panneau isolant P de reprendre son volume initial. La dent se trouve à l'extérieur du panneau isolant et coopère avec une face du panneau isolant (sa face opposée à la paroi). Cela permet d'exercer une contrainte sur ledit panneau isolant P améliorant le maintien.

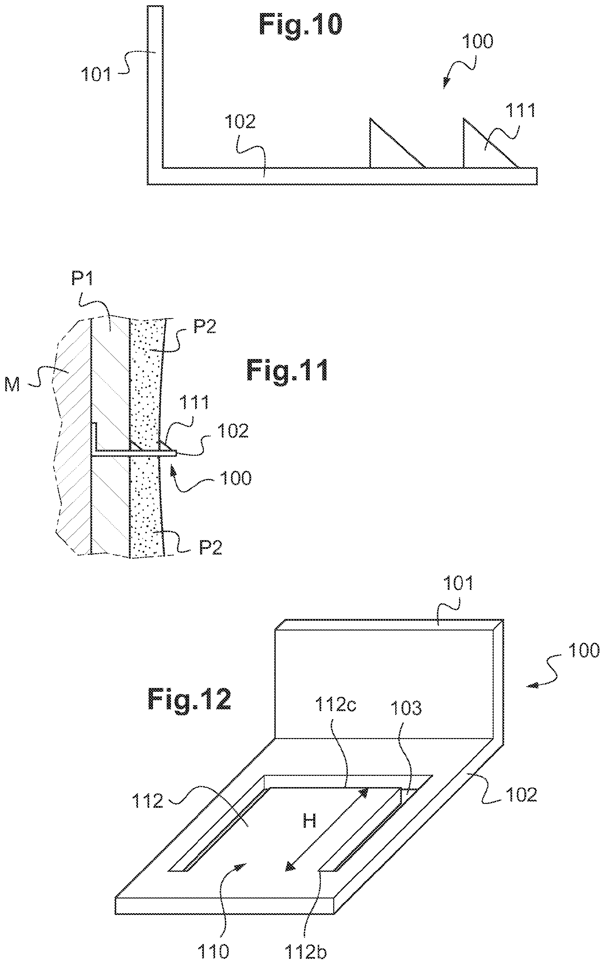

Dans une variante de ce premier mode de réalisation visible à la figure 10, les dents 111 de l'équerre 100 (indifféremment sous forme de lames ou profilés) sont agencées pour être positionnées à des distances différentes de la plaque de fixation 101. On comprend par-là que des dents 111 ou série de dents 111 parallèles entre elles sont positionnées pour que chaque dent 111 ou série de dents 111 soit à une distance particulière de la plaque de fixation 101.

Cette configuration peut être utilisée pour la fixation de plusieurs panneaux isolants P. Dans ce cas, chaque dent 111 ou série de dents est utilisée pour la fixation d'un panneau isolant P particulier comme visible à la figure 11. Sur cette figure 11, on observe que la dent 111 la plus proche de la plaque de fixation 101 est utilisée pour maintenir en place un premier panneau P1 embroché sur ladite équerre 100. Puis, un second panneau isolant P2 est embroché de sorte à entrer en contact avec le premier panneau isolant P1, la seconde dent 111 la plus proche étant utilisée pour maintenir ce second panneau isolant P2 en place et ainsi de suite. La distance entre la plaque de fixation 101 et la première dent 111 et l'intervalle entre les différentes dents 111 sont calculés pour être identiques ou non pour permettre la pose de panneaux isolants Pi de même épaisseurs ou non.

Cette configuration peut également être utilisée pour améliorer le maintien dudit panneau isolant P ou pour permettre d'utiliser l'équerre avec des panneaux d'épaisseurs différentes tout en assurant un maintien du panneau par l'extérieur par les moyens anti-basculement. Dans un cas particulier, la dent 111 la plus éloignée de la plaque de fixation 101 est utilisée pour traverser ledit panneau isolant P et le maintenir alors que la ou les dents 111 intermédiaires, c'est-à-dire plus proche de la plaque de fixation 101, sont utilisées pour se retrouver dans l'épaisseur dudit panneau isolant P. Dans ce cas, elles offrent un maintien supplémentaire en offrant une résistance à l'intérieur du panneau isolant P. Dans d'autres cas, si le panneau est moins épais, une dent intermédiaire ayant traversé le panneau isolant lors de l'embrochement viendra le maintenir par l'extérieur, tandis que les éventuelles dents plus proche de la plaque de fixation 101 coopéreront avec l'intérieur du panneau et les dents plus éloignées de la plaque de fixation 101 se trouveront à l'extérieur et éloignées du panneau.

Dans un second mode de réalisation visible à la figure 12, les moyens de maintien anti-basculement 110 comprennent au moins un volet 112.

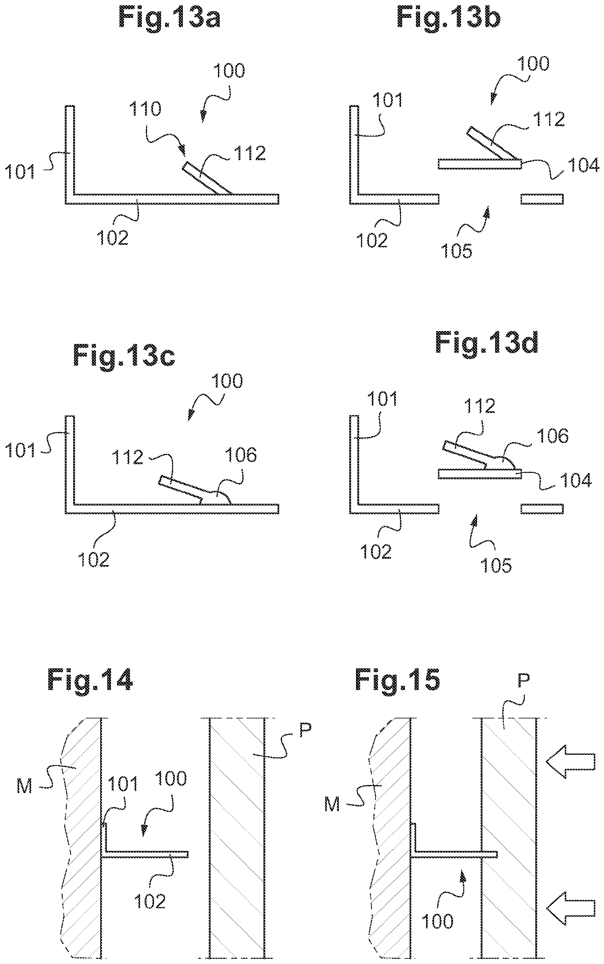

Le volet 112 pourra être agencé dans un logement 103, traversant ou non, réalisé dans l'épaisseur de la plaque de maintien 102 ou s'étendre depuis un plot 106 agencé sur ladite plaque de maintien 102 comme visible aux figures 13a à 13d. Dans le cas du volet 112 agencé dans un logement 103 de la plaque de maintien 102, le volet 112 pourra être découpé ou prédécoupé.

Selon un premier mode d'exécution visible aux figures 13c à 13d, le volet 112 est réalisé dans le même matériau que ladite équerre 100. Dans le cas d'un volet 112 s'étendant depuis un plot 106, ce plot 106 pourra être monobloc avec la plaque de maintien 102 ou rapporté sur celle-ci.

Selon un second mode d'exécution visible aux figures 13a à 13b, le volet 112 est réalisé dans un autre matériau que celui de ladite équerre 100. Pour cela, le volet 112 est agencé sur un support 104 rapporté sur la plaque de maintien 102, via par exemple, une ouverture 105 pratiquée dans ladite plaque de maintien 102. Ce support 104 comprend le logement 103' ou le plot 106'. Le support 104 est fixé par collage, soudage, brasage, rivetage ou toutes autres méthodes possibles sur ladite équerre.

Ce mode d'exécution permet d'avoir un volet 112 réalisé dans un matériau ayant des caractéristiques différentes de celui dans lequel l'équerre 100 est réalisée. On pourra, par exemple, imaginer une équerre 100 réalisée dans un matériau rigide comme du métal ou de la céramique tout en ayant un volet 112 réalisé dans un matériau élastique, déformable, comme le plastique.

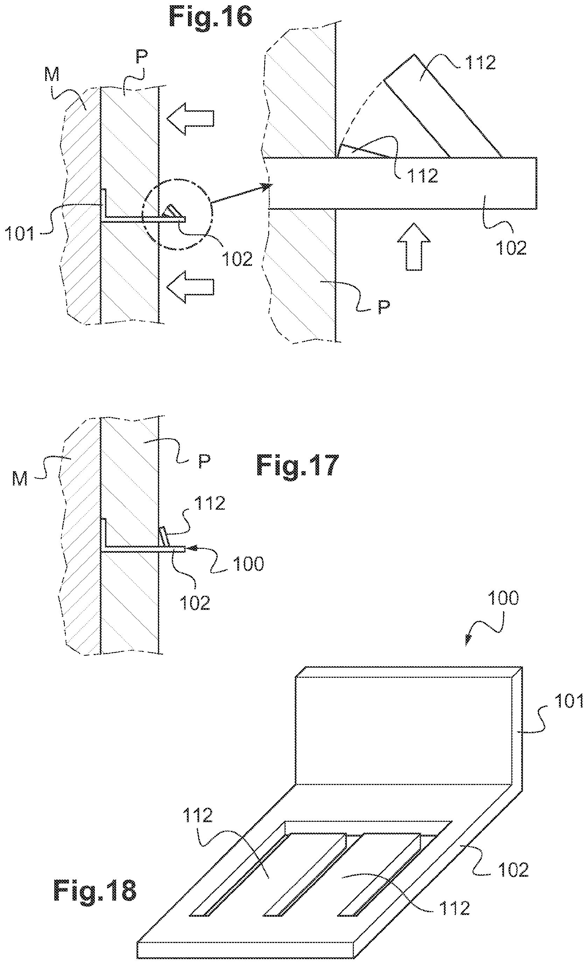

Lors du montage du panneau isolant P visible aux figures 14 à 17, ce dernier est embroché sur ladite équerre 100. Une fois ce panneau P embroché sur ladite équerre 100, une pression est exercée sur celui-ci afin que le volet 112, agencé au niveau de la plaque de maintien 102, traverse ledit panneau isolant P et devienne visible. Une fois cette condition remplie, une action est exercée par l'opérateur sur le volet 112 découpé ou prédécoupé comme visible à la figure 16. Cette action se présentant sous la forme d'une force qui permet, en plus de découper le volet 112 lorsque celui-ci est prédécoupé, de le faire pivoter pour le placer dans une position sensiblement perpendiculaire par rapport à la plaque de maintien 102.

Cette position du volet 112 par rapport à la plaque de maintien 102 permet d'opérer la fonction de maintien. En effet, une fois ce volet 112 placé dans cette position au moins sensiblement perpendiculaire, l'opérateur relâche la pression qu'il exerce sur le panneau isolant P. Ce relâchement entraîne une réaction dudit panneau isolant P qui tend à reprendre son volume initial. Le panneau isolant P tendant à reprendre sa position initiale entre en contact avec le volet 112. Ce volet 112, avec sa position sensiblement perpendiculaire par rapport à la plaque de maintien 102, fait alors naturellement office de barrière. Effectivement, dans cette position sensiblement perpendiculaire par rapport à la plaque de maintien 102, le volet 112 présente une surface bloquant la reprise, par ledit panneau isolant P, de sa forme initiale comme visible à la figure 17.De préférence, comme illustré sur la figure 12, l'extrémité distale du volet est dirigée vers la plaque de fixation, et le volet fonctionne à la manière d'une lame ressort qui, une fois dans sa position sensiblement perpendiculaire à la plaque de maintien (position déployée), forme un moyen anti-retour sollicitant le panneau isolant en compression.

Dans une première variante de ce second mode de réalisation, l'équerre 100 comprendra au moins deux volets 112.

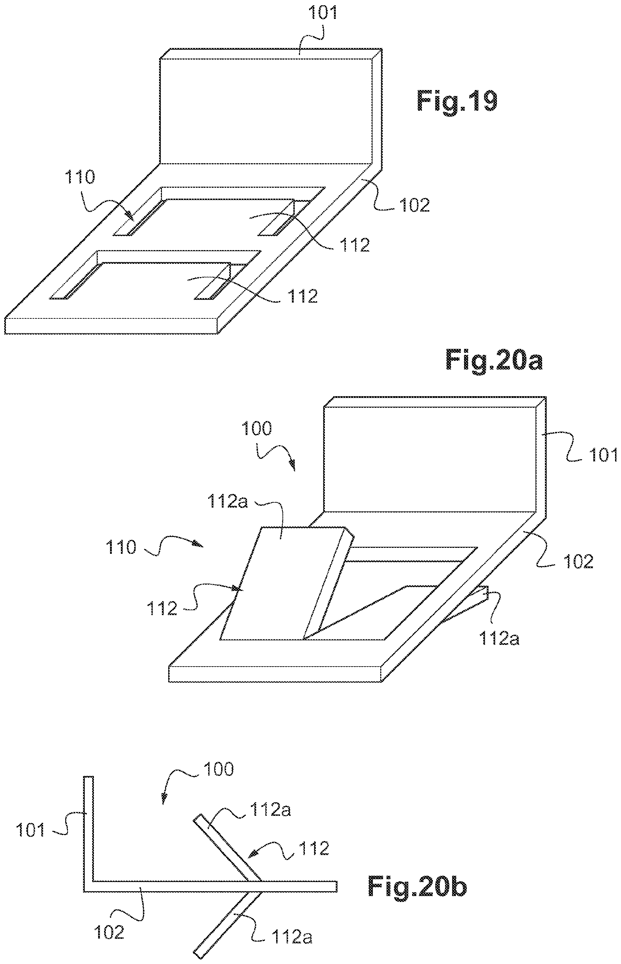

Selon une première configuration de cette première variante visible aux figures 20a et 20b, le volet 112 est divisé en au moins deux parties 112a. Cette division du volet 112 en deux parties 112a permet à celles-ci de s'étendre de façon opposée. En effet, cette première configuration autorise les deux parties 112a constitutives du volet 112 à être manipulées de manière indépendante. De cette façon, il est possible que les parties 112a du volet 112 soient manipulées pour être placées de part et d'autre de la plaque de maintien 102 comme visible à la figure 20b. Cette possibilité permet avantageusement d'augmenter la longueur de la surface de maintien, celle-ci étant par exemple doublée. Le maintien offert par cette première configuration est donc amélioré.

Selon une seconde configuration de cette première variante visible à la figure 18, les volets 112 sont montés côte à côte de sorte à être à la même distance de la plaque de fixation 101.

Ces configurations à deux volets côte à côte permettent un montage alternatif du panneau isolant sur ladite paroi. Ce montage alternatif consiste à placer l'équerre 100 selon l'invention entre deux panneaux isolants P. Dans ce cas précis, les panneaux isolants P ne sont plus embrochés mais simplement en contact avec lesdites équerres 100. Ce contact est réalisé entre l'une des faces de la plaque de maintien 102 et la tranche/l'épaisseur dudit panneau isolant P.

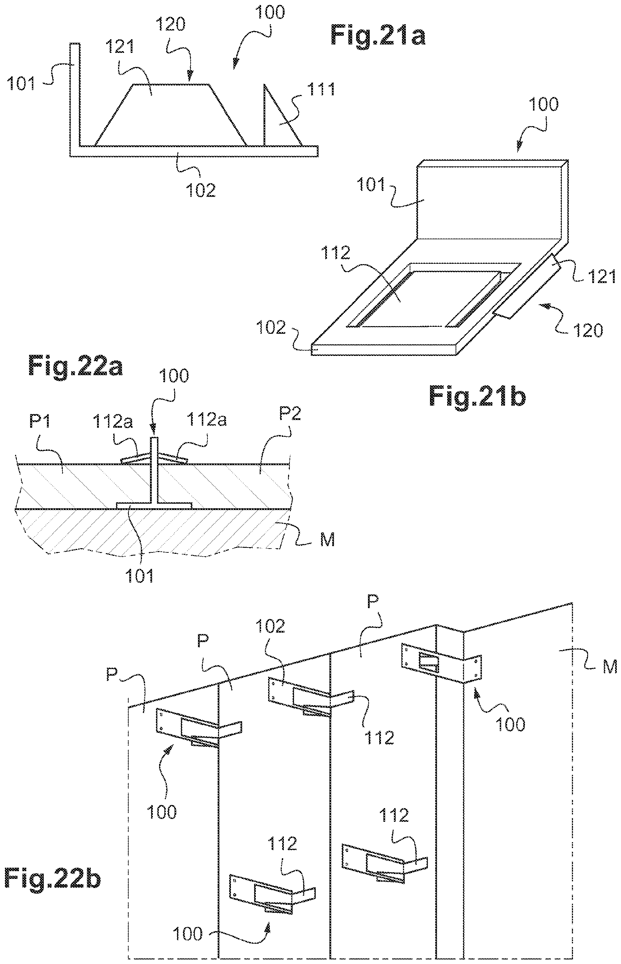

Il devient alors possible d'avoir deux panneaux isolants P agencés l'un à côté de l'autre avec au moins une équerre 100 agencée entre eux de sorte que les panneaux isolants P se trouvent de part et d'autre de la plaque de maintien 102 comme visible aux figures 22a et 22b. Cet agencement permet avantageusement d'agir sur les volets 112, 112a pour qu'ils se déploient de part et d'autre de la plaque de maintien 102. La même équerre 100 peut alors aider au maintien de deux panneaux isolants P1, P2 différents.

Ce montage alternatif fonctionne également dans le cas de panneaux isolants P montés l'un au-dessus de l'autre. Ce montage alternatif fonctionne également dans le cas d'équerres 100 munies de dents 111.

Bien entendu, il pourra être prévu que les équerres 100 soient fixées au mur de sorte que certaines équerres 100 embrochent le ou les panneaux isolants P alors que d'autres équerres 100 soient agencées entre deux panneaux isolants P et être seulement en contact. Les équerres 100 pourront être ainsi montées en quinconce.

Selon une troisième configuration de cette première variante visible à la figure 19, les volets 112 sont montés de sorte à être à une distance différente de la plaque de fixation 101. Cette seconde configuration permet, au choix, d'avoir la possibilité d'embrocher des panneaux isolants P de différentes épaisseurs (ie. l'équerre est adaptée à recevoir différentes épaisseurs de panneaux isolants, disposés en une seule couche sur le mur) ou d'embrocher plusieurs panneaux isolants P sur la même équerre 100.

Pour cela, un premier panneau isolant P est embroché puis maintenu par un volet 112 placé dans une position sensiblement vertical par rapport à la plaque de maintien 102. Puis, un second panneau isolant P est embroché de sorte à se trouver en contact du premier panneau isolant P. Une pression est exercée sur le second panneau isolant P afin que la manipulation d'un second volet 112 puisse se faire. Cette manipulation consiste à placer le second volet 112 dans une position sensiblement perpendiculaire par rapport à la plaque de maintien. Suite à cela, la pression exercée sur le second panneau isolant est relâchée de sorte qu'il tend à reprendre son volume initial. Cette tendance est stoppée par le volet qui bloque le basculement du panneau isolant.

Bien entendu, il est possible de combiner les trois configurations pour obtenir des volets 112 agencés à des distances différentes de la plaque de fixation 101, chaque volet étant composé d'au moins deux parties 112a.

Dans une variante des différents modes de réalisation visible aux figures 21a et 21b, l'équerre 100 selon l'invention comprend en outre des moyens de maintien anti-affaissement 120. Ces moyens de maintien anti-affaissement 120 comprennent au moins une surface anti-affaissement. De préférence, cette surface est générée par une lame 121 s'étendant depuis la plaque de maintien 102 de façon perpendiculaire et horizontale par rapport à la paroi du mur M sur laquelle l'équerre 100 est fixée.

Cette surface anti-affaissement permet avantageusement d'offrir une surface sur laquelle le panneau isolant P peut, en partie, se reposer de sorte à éviter qu'il ne s'affaisse sur lui-même.

Cette surface anti-affaissement sera choisie pour être la plus importante possible sans gêner l'embrochage. Cette surface pourra être plane, convexe ou concave.

Avantageusement, cette surface anti-affaissement sera générée par une lame 120 s'étendant dans le même plan que la dent 111 du premier mode de réalisation. De cette façon, la surface frontale de cette lame 121 générant la surface anti-affaissement et la surface frontale de la dent 111 de maintien du premier mode de réalisation lors de l'embrochage se confondent au moins en partie. Cette configuration permet ainsi d'avoir la surface frontale la plus faible possible et donc le moins de résistance lors de l'embrochage.

Cette lame générant la surface anti-affaissement aura préférentiellement une forme trapézoïdale.

Bien entendu, il est envisageable d'avoir plusieurs surfaces anti-affaissement. Par exemple, il pourra être prévu que les surfaces anti-affaissement s'étendent de part et d'autres de la plaque de maintien 102.

Bien entendu, la présente invention ne se limite pas à l'exemple illustré mais est susceptible de diverses variantes et modifications qui apparaîtront à l'homme de l'art.

En effet, il pourra être prévu d'avoir une combinaison des modes de réalisations avec au moins un volet 112 et des dents 111.

Il a été constaté que le maintien du panneau est optimal lorsque la largeur de contact totale des moyens anti-basculement dans au moins un plan transversal de l'équerre situé à une distance particulière de la plaque de fixation, est supérieure à 1 cm. On comprend que cette largeur de contact correspond à la largeur sur laquelle le panneau isolant est effectivement retenu par les moyens anti-basculement. Après montage, les moyens anti-basculement situés dans ledit plan transversal sont de préférence destinés à maintenir le panneau par l'extérieur, en coopérant avec sa face opposée à la paroi. Par largeur de contact totale des moyens anti-basculement, on entend le cas échéant la somme des largeurs (mesurées dans la direction latérale) des éléments constituant des moyens anti-basculement (volets, dents) dans le même plan transversal de l'équerre.

Cette disposition s'applique aux différents modes de réalisation décrits précédemment : que les moyens anti-basculement comprennent, dans la direction latérale, une succession de dents sous forme de lames du type illustré par exemple sur les figures 4 ou 5, un ou plusieurs profilés du type illustré par exemple sur la figure 6, un ou plusieurs volets du type illustré par exemple sur les figures 12, 18, 20a.

Par ailleurs, la hauteur des moyens anti-basculement, mesurée orthogonalement au plan de la plaque de maintien 102, est de préférence d'au moins 5mm. Lorsque les moyens anti-basculement sont des dents, comme sur les figures 3 et 6, cette hauteur correspond à la hauteur H des cathètes 111a. Lorsque les moyens anti-basculement sont des volets, comme par exemple sur la figure 12, cette hauteur correspond à la hauteur maximale du volet en position déployée, autrement dit à la longueur du volet mesurée entre son extrémité proximale fixe 112b et son extrémité distale libre 112c.

## Revendications

1. Procédé de pose d'au moins une épaisseur de panneau isolant sur la paroi d'un mur, ledit procédé comprenant les étapes suivantes :
- Se munir d'au moins une équerre (100) comprenant une plaque de fixation (101) destinée à être fixée à ladite paroi et une plaque de maintien (102), ladite plaque de maintien (102) s'étendant sensiblement perpendiculairement à ladite plaque de fixation (102), ladite équerre (100) comprenant des moyens de maintien anti-basculement (110) agencés pour empêcher le panneau isolant (P) de basculer sur lui-même, lesdits moyens de maintien anti-basculement comprenant au moins une dent (111) s'étendant saillante sur une face (102a) de ladite plaque de maintien (102), notamment perpendiculairement depuis ladite plaque de maintien (102) ou formant un angle aigu avec la plaque de maintien (102) en direction de la plaque de fixation (101) ;
- Fixer ladite équerre sur une paroi dudit mur (M) ;
- Se munir d'un panneau isolant (P);
- Plaquer ledit panneau isolant (P) sur la paroi en exerçant une contrainte de poussée de sorte que le panneau isolant soit au contact, sur toute son épaisseur, avec la plaque de maintien (102) de ladite équerre;
- Relâcher la contrainte pour permettre audit panneau isolant (P) de reprendre son volume initial et pour permettre à la dent (111) de ladite équerre de maintenir le panneau isolant (P), par coopération avec une face du panneau isolant ;
et si on veut poser au moins une seconde épaisseur de panneau isolant :
- Se munir d'un autre panneau isolant (P);
- Plaquer ledit panneau isolant sur la paroi en exerçant une contrainte de poussée de sorte que le panneau isolant (P) soit au contact, sur toute son épaisseur, avec la plaque de maintien (102) de ladite équerre (100);
- Relâcher la contrainte pour permettre audit panneau isolant (P) de reprendre son volume initial et pour permettre à la dent (111) de ladite équerre de maintenir le panneau isolant (P), par coopération avec une face du panneau isolant.

2. Procédé de pose selon la revendication 1, dans lequel ledit au moins un panneau isolant (P) est embroché sur ladite équerre sur toute son épaisseur.

3. Procédé de pose selon la revendication 1 ou 2, dans lequel chaque panneau isolant (P) est maintenu par deux équerres (100) et, pour deux panneaux isolants (P) placés côte à côte, les équerres (100) sont fixées au mur (M) pour être agencées en quinconce, certaines équerres (100) embrochant un panneau isolant (P) alors que d'autres équerres (100) sont agencées entre deux panneaux isolants (P).

4. Procédé de doublage de mur, comportant la pose d'au moins une épaisseur de panneau isolant selon l'une des revendications 1 à 3, comprenant le montage d'une ossature de doublage par fixation de supports (S) sur les plaques de maintien (102) des équerres (100), et la fixation de panneaux de doublage sur lesdits supports.

5. Ensemble comprenant un mur (M) muni d'une paroi, au moins un panneau isolant (P) agencé sur ladite paroi et au moins une équerre (100) comprenant une plaque de fixation (101) destinée à être fixée à ladite paroi et une plaque de maintien (102), en état d'utilisation, ladite plaque de maintien (102) s'étendant sensiblement perpendiculairement à ladite plaque de fixation (101), en contact avec le panneau isolant sur toute l'épaisseur dudit panneau, ladite équerre (100) comprenant des moyens de maintien anti-basculement (110) agencés pour empêcher le panneau isolant (P) de basculer sur lui-même par coopération avec une face du panneau isolant, lesdits moyens de maintien anti-basculement comprenant au moins une dent (111) s'étendant saillante sur une face (102a) de ladite plaque de maintien (102), notamment perpendiculairement depuis ladite plaque de maintien (102) ou formant un angle aigu avec la plaque de maintien (102) en direction de la plaque de fixation (101).

6. Equerre (100) pour la pose d'un panneau isolant (P) sur une paroi d'un mur (M) selon le procédé de l'une des revendications 1 à 4, pour former un ensemble selon la revendication 5, ladite équerre comprenant une plaque de fixation (101) destinée à être fixée à ladite paroi et une plaque de maintien (102), ladite plaque de maintien (102) s'étendant sensiblement perpendiculairement à ladite plaque de fixation (102) afin de maintenir ledit panneau isolant (P), ladite équerre (100) comprenant en outre des moyens de maintien anti-basculement (110) agencés pour empêcher le panneau isolant (P) de basculer sur lui-même, lesdits moyens de maintien anti-basculement (110) comprennent au moins une dent (111) s'étendant saillante sur une face (102a) de ladite plaque de maintien (102) et formant un angle aigu avec la plaque de maintien (102) en direction de la plaque de fixation (101), **caractérisée en ce que** ladite dent se présente sous la forme d'un profilé (111") de section triangulaire et constante dans sa direction principale qui s'étend sur au moins une partie de la largeur de la plaque de maintien (102), la dimension du profilé dans cette direction principale étant supérieure aux dimensions de sa section.

7. Equerre selon la revendication 6, dans laquelle lesdits moyens de maintien anti-basculement (110) comprennent au moins deux dents (111) agencées à des distantes différentes de la plaque de fixation (101).

8. Equerre selon les revendications 6 ou 7, dans laquelle lesdits moyens de maintien anti-basculement (110) comprennent au moins deux dents (111) agencées parallèlement l'une par rapport à l'autre.

9. Equerre selon l'une des revendications 6 à 8, **caractérisée en ce que** chaque dent (111) présente un profil de triangle rectangle ayant l'un de ses cathètes (111a) en regard de la plaque de fixation (101).

10. Equerre selon l'une des revendications 6 à 9, **caractérisée en ce qu'**elle comprend en outre des moyens de maintien anti-affaissement (120) comprenant au moins une surface anti-affaissement générée par une lame (121) s'étendant depuis la plaque de maintien (102) de façon sensiblement perpendiculaire et horizontale par rapport à la paroi du mur (M) sur laquelle l'équerre (100) est fixée.

## Patentansprüche

1. Verfahren zum Anbringen mindestens einer Dämmplattenschicht an der Wand einer Mauer, wobei das Verfahren die folgenden Schritte umfasst:
- Bereitstellen mindestens eines Winkels (100), umfassend eine Befestigungsplatte (101), die dazu bestimmt ist, an der Wand befestigt zu werden, und eine Halteplatte (102), wobei die Halteplatte (102) sich im Wesentlichen senkrecht zu der Befestigungsplatte (102) erstreckt, wobei der Winkel (100) das Kippen verhindernde Haltemittel (110) umfasst, die dazu eingerichtet sind zu verhindern, dass die Dämmplatte (P) um sich selbst kippt, wobei die das Kippen verhindernden Haltemittel mindestens einen Zahn (111) umfassen, der sich vorspringend auf einer Seite (102a) der Halteplatte (102), insbesondere senkrecht von der Halteplatte (102) oder mit der Halteplatte (102) einen spitzen Winkel bildend, in Richtung der Befestigungsplatte (101) erstreckt;
- Befestigen des Winkels an einer Wand der Mauer (M);
- Bereitstellen einer Dämmplatte (P);
- Pressen der Dämmplatte (P) unter Ausübung einer Schubbelastung an die Wand, so dass die Dämmplatte über ihre gesamte Dicke mit der Halteplatte (102) des Winkels in Kontakt ist;
- Verringern der Belastung, um der Dämmplatte (P) zu ermöglichen, wieder ihr ursprüngliches Volumen anzunehmen, und um dem Zahn (111) des Winkels zu ermöglichen, durch Zusammenwirken mit einer Seite der Dämmplatte die Dämmplatte (P) zu halten;
und wenn mindestens eine zweite Dämmplattenschicht angebracht werden soll:
- Bereitstellen einer weiteren Dämmplatte (P);
- Pressen der Dämmplatte unter Ausübung einer Schubbelastung an die Wand, so dass die Dämmplatte (P) über ihre gesamte Dicke mit der Halteplatte (102) des Winkels (100) in Kontakt ist;
- Verringern der Belastung, um der Dämmplatte (P) zu ermöglichen, wieder ihr ursprüngliches Volumen anzunehmen, und um dem Zahn (111) des Winkels zu ermöglichen, durch Zusammenwirken mit einer Seite der Dämmplatte die Dämmplatte (P) zu halten.

2. Anbringungsverfahren nach Anspruch 1, wobei die mindestens eine Dämmplatte (P) auf ihrer gesamten Dicke auf den Winkel aufgespießt wird.

3. Anbringungsverfahren nach Anspruch 1 oder 2, wobei jede Dämmplatte (P) von zwei Winkeln (100) gehalten wird und für zwei nebeneinander platzierte Dämmplatten (P) die Winkel (100) so an der Mauer (M) befestigt werden, dass sie gegeneinander versetzt angeordnet sind, sodass manche Winkel (100) eine Dämmplatte (P) aufspießen, während andere Winkel (100) zwischen zwei Dämmplatten (P) angeordnet sind.

4. Verfahren zum Aufdoppeln einer Mauer, beinhaltend das Anbringen mindestens einer Dämmplattenschicht nach einem der Ansprüche 1 bis 3, das die Montage eines Aufdopplungsrahmens durch Befestigung von Trägern (S) an den Halteplatten (102) der Winkel (100) und die Befestigung von Aufdopplungsplatten an den Trägern umfasst.

5. Einheit, umfassend eine Mauer (M) mit einer Wand, mindestens eine Dämmplatte (P), die an der Wand angeordnet ist, und mindestens einen Winkel (100), umfassend eine Befestigungsplatte (101), die dazu bestimmt ist, an der Wand befestigt zu werden, und eine Halteplatte (102) im Nutzungszustand, wobei die Halteplatte (102) sich im Wesentlichen senkrecht zu der Befestigungsplatte (101) über die gesamte Dicke der Dämmplatte in Kontakt mit der Dämmplatte erstreckt, wobei der Winkel (100) das Kippen verhindernde Haltemittel (110) umfasst, die dazu eingerichtet sind, durch Zusammenwirken mit einer Seite der Dämmplatte zu verhindern, dass die Dämmplatte (P) um sich selbst kippt, wobei die das Kippen verhindernden Haltemittel mindestens einen Zahn (111) umfassen, der sich vorspringend auf einer Seite (102a) der Halteplatte (102), insbesondere senkrecht von der Halteplatte (102) oder mit der Halteplatte (102) einen spitzen Winkel bildend, in Richtung der Befestigungsplatte (101) erstreckt.

6. Winkel (100) zum Anbringen einer Dämmplatte (P) an einer Wand einer Mauer (M) gemäß dem Verfahren eines der Ansprüche 1 bis 4 zum Bilden einer Einheit nach Anspruch 5, wobei der Winkel eine Befestigungsplatte (101), die dazu bestimmt ist, an der Wand befestigt zu werden, und eine Halteplatte (102) umfasst, wobei die Halteplatte (102) sich im Wesentlichen senkrecht zu der Befestigungsplatte (102) erstreckt, um die Dämmplatte (P) zu halten, wobei der Winkel (100) ferner das Kippen verhindernde Haltemittel (110) umfasst, die dazu eingerichtet sind zu verhindern, dass die Dämmplatte (P) um sich selbst kippt, wobei die das Kippen verhindernden Haltemittel (110) mindestens einen Zahn (111) umfassen, der sich vorspringend auf einer Seite (102a) der Halteplatte (102) und mit der Halteplatte (102) einen spitzen Winkel bildend in Richtung der Befestigungsplatte (101) erstreckt, **dadurch gekennzeichnet, dass** der Zahn in Form eines Profils (111") mit einem dreieckigen und in seiner Hauptrichtung gleich bleibenden Querschnitt vorliegt, das sich über zumindest einen Teil der Breite der Halteplatte (102) erstreckt, wobei die Abmessung des Profils in dieser Hauptrichtung größer als die Abmessungen seines Querschnitts ist.

7. Winkel nach Anspruch 6, wobei die das Kippen verhindernden Haltemittel (110) mindestens zwei Zähne (111) umfassen, die in unterschiedlichen Abständen von der Befestigungsplatte (101) angeordnet sind.

8. Winkel nach Anspruch 6 oder 7, wobei die das Kippen verhindernden Haltemittel (110) mindestens zwei Zähne (111) umfassen, die parallel zueinander angeordnet sind.

9. Winkel nach einem der Ansprüche 6 bis 8, **dadurch gekennzeichnet, dass** jeder Zahn (111) ein Profil eines rechtwinkligen Dreiecks aufweist, wobei eine seiner Katheten (111a) der Befestigungsplatte (101) gegenüberliegt.

10. Winkel nach einem der Ansprüche 6 bis 9, **dadurch gekennzeichnet, dass** er überdies das Zusammensinken verhindernde Haltemittel (120) umfasst, die mindestens eine das Zusammensinken verhindernde Oberfläche umfassen, die von einer Zunge (121) erzeugt wird, die sich von der Halteplatte (102) im Wesentlichen senkrecht und horizontal in Bezug auf die Wand der Mauer (M), an welcher der Winkel (100) befestigt wird, erstreckt.

## Claims

1. A method for fitting at least one insulating panel thickness on the surface of a wall, said method comprising the following steps:
- obtaining at least one bracket (100) for fitting an insulating panel (P) on a surface of a wall (M) comprising a fixing plate (101) intended to be fixed to said surface and a holding plate (102), said holding plate (102) extending substantially at right angles to said fixing plate (102) in order to hold said insulating panel (P), **characterized in that** said bracket (100) further comprises anti-tilting holding means (110) arranged to prevent the insulating panel (P) from tilting on itself, wherein said anti-tilting holding means (110) comprise at least one tooth (111) extending protrudingly on a face (102a) of said holding plate (102), in particular at right angles from said holding plate (102) or forming an acute angle with the holding plate (102) toward the fixing plate (101).
- fixing said bracket onto a surface of said wall (M);
- obtaining an insulating panel (P);
- pressing said insulating panel (P) onto the surface by exerting a thrusting strain such that the insulating panel is in contact, over its thickness, with the holding plate (102) of said bracket;
- relaxing the strain to allow said insulating panel (P) to revert to its initial volume and to allow the tooth (111) of said bracket to hold the insulating panel (P);
and if there is at least one second thickness of insulating panel to be fitted:
- obtaining another insulating panel (P);
- pressing said insulating panel onto the surface by exerting a thrusting strain such that the insulating panel (P) is in contact, over its thickness, with the holding plate (102) of said bracket (100);
- relaxing the strain to allow said insulating panel (P) to revert to its initial volume and to allow the tooth (111) of said bracket to hold the insulating panel (P).

2. The fitting method as claimed in claim 1, wherein said at least one insulating panel (P) is pinned on said bracket.

3. The fitting method as claimed in one of claims 16 to 19, wherein each insulating panel (P) is held by two brackets (100) and wherein, for two insulating panels (P) placed side-by-side, the brackets (100) are fixed to the wall (M) to be arranged in staggered formation, some brackets (100) pinning an insulating panel (P) while other brackets (100) are arranged between two insulating panels (P).

4. A wall lining method, comprising the fitting of at least one thickness of insulating panel as claimed in one of claims 16 to 20, comprising the mounting of a lining framework by fixing supports (S) onto the holding plates (102) of the brackets (100), and the fixing of lining panels onto said supports.

5. An assembly comprising a wall (M) provided with a surface, at least one insulating panel (P) arranged on said surface and at least one bracket (100) comprising a fixing plate (101) intended to be fixed to said surface and a holding plate (102), said holding plate (102) extending in use state substantially at right angles to said fixing plate (101), and in contact with the insulation panel (P) over the entire thickness of said panel, said bracket (100) comprising comprises anti-tilting holding means (110) arranged to prevent the insulating panel (P) from tilting on itself, wherein said anti-tilting holding means (110) comprise at least one tooth (111) extending protrudingly on a face (102a) of said holding plate (102) and forming an acute angle with the holding plate (102) toward the fixing plate (101), and wherein each tooth (111) takes the form of a profile (111") extending over at least a part of the width of the holding plate (101).

6. A bracket (100) for fitting an insulating panel (P) on a surface of a wall (M) according to a method of one of claims 1 to 4, to form an assembly according to claim 5, said bracket (100) comprising a fixing plate (101) intended to be fixed to said surface and a holding plate (102), said holding plate (102) extending in use state substantially at right angles to said fixing plate (101) in order to maintain said panel (P), said bracket (100) further comprising comprising anti-tilting holding means (110) arranged to prevent the insulating panel (P) from tilting on itself, wherein said anti-tilting holding means (110) comprise at least one tooth (111) extending protrudingly on a face (102a) of said holding plate (102) and forming an acute angle with the holding plate (102) toward the fixing plate (101), **characterized in that** said tooth (111) takes the form of a profile (111") of an triangular constant section in its principal direction, that extends over at least a part of the width of the holding plate (101) the dimension of the profile in this principal direction being greater than the dimensions of its section.

7. The bracket as claimed in claim 6, wherein said anti-tilting holding means (110) comprise at least two teeth (111) arranged at different distances from the fixing plate (101).

8. The bracket as claimed in claim 6 or 7, wherein said anti-tilting holding means (110) comprise at least two teeth (111) arranged parallel to one another.

9. The bracket as claimed in one of claims 6 to 8, **characterized in that** each tooth (111) has a right-angled triangle profile having one of its cathetuses (111a) facing the fixing plate (101).

10. The bracket as claimed in one of claims 6 to 9, **characterized in that** it further comprises anti-sag holding means (120) comprising at least one anti-sag surface generated by a blade (121) extending from the holding plate (102) substantially at right angles and horizontal relative to the surface of the wall (M) on which the bracket (100) is fixed.
